# EUROPEAN PATENT APPLICATION

(11) **EP 1 193 894 A2**
(43) Date of publication of application: **03.04.2002**
(21) Application number: 01121355.0
(22) Date of filing: 06.09.2001
(51) Int. Cl.: H04B 10/155, H04B 10/135

(54) **Optical pulse generator having narrow spectrum width**

(30) Priority: 29.09.2000 JP 2000299312
(71) Applicant: KDD Submarine Cable Systems Inc., Tokyo (JP)
(72) Inventor: Morita, Itsuro, Kamifukuoka-shi, Saitama (JP); Edagawa, Noboru, Kamifukuoka-shi, Saitama (JP); Tanaka, Keiji, Kamifukuoka-shi, Saitama (JP); Tsuritani, Takehiro, Kamifukuoka-shi, Saitama (JP); Suzuki, Masatoshi, Kamifukuoka-shi, Saitama (JP)
(74) Representative: Schaumburg, Thoenes & Thurn

(57) **Abstract**

An object of this invention is to generate a high-speed optical signal pulse with a narrow spectrum width of a constant polarization. An optical pulse generator (10) generates an optical pulse of S polarization. An optical splitter (12) splits the optical pulse output from the optical pulse generator (10) into two portions maintaining its polarization and applies one portion to a data modulator (14) and the other to a data modulator (16). The data modulators (14 and 16) digitally modulate the optical output pulses from the optical splitter (12) according to data #1 and #2 respectively. A Faraday rotator (18) converts the optical output from the data modulator (14) from S polarization to P polarization. An optical delay (20) delays the optical pulse from the data modulator (16) in order to multiplex with the optical pulse from the Faraday rotator (18) in the time domain. A polarization beam splitter (22) combines the optical outputs from the Faraday rotator (18) and optical delay (20) maintaining their polarizations. A wavelength converter (24) modulates the intensity of a CW probe light (26) of wavelength λ2 according to the intensity variation of the output from the polarization beam splitter (22) and outputs the modulated probe light (26).

## Description

### FIELD OF THE INVENTION

This invention relates to an optical transmitter applicable to high-speed optical transmission systems.

### BACKGROUND OF THE INVENTION

In conventional high-speed optical transmission systems of 40 Gbit/s or more, it is difficult to obtain electric circuits to operate at the speed corresponding to the transmission rate of the systems. Therefore, a method that generates a plurality of low-speed optical signals and multiplexes them in the time domain is generally employed. In this method, to obtain satisfactory transmission characteristics, it is necessary to suppress the interference occurs when a plurality of channels of optical pulses are multiplexed. Accordingly, it has been necessary to generate optical pulses having sufficiently narrow pulse width compared to pulse interval after the multiplexing in the time domain in each channel or orthogonalize polarizations of optical pulse trains of two channels.

The narrower a pulse width becomes, the wider a spectrum width becomes. In a transmission line in which adjacent optical pulses overlap each other because the optical pulse width widens due to the chromatic dispersion in a transmission fiber, four-wave mixing (intra-channel four-wave mixing) occurs by interaction with another optical pulse, and causes the deterioration of the transmission characteristics.

To suppress the pulse expansion due to the chromatic dispersion in the transmission lines, it is effective to narrow the spectrum width of the optical pulse. However, since this causes the expansion of the pulse width, the interference between the pulses occurs and satisfactory transmission pulse cannot be obtained in the conventional optical time division multiplexing in which polarizations are nonorthogonal.

In the optical time division multiplexing in which the polarizations are orthogonal, it is possible to obtain optical transmission signals of wide pulse width and narrow spectrum width. However, since the transmission speed differs per polarization due to the polarization mode dispersion in the transmission line, the satisfactory transmission characteristics cannot be obtained. Furthermore, although the orthogonalization of the polarizations of the adjacent channels is effective to obtain the satisfactory transmission characteristics in the wavelength division multiplexing transmission, it is unable to utilize the optical time division multiplexing to orthogonalize the polarizations and orthogonalize the polarizations between the adjacent channels.

### SUMMARY OF THE INVENTION

It is therefore an object of the present invention to provide an optical transmitter to remove the above-described problems.

That is, the object of the present invention is to provide an optical transmitter to generate optical pulse signals having a single polarization and narrow spectrum width.

An optical transmitter according to the invention consists of an optical pulse generator to generate an optical pulse train of a constant linear polarization, an optical splitter to split the optical output from the optical pulse generator into two portions, a first data modulator to modulate one portion of the optical outputs from the optical splitter according to a first data, a second data modulator to modulate the other optical output from the optical splitter according to a second data, a polarization converter to convert the polarization of the optical output from the first data modulator into an orthogonal polarization, an optical multiplexer to multiplex the optical outputs from the second data modulator and polarization converter in the time domain, and a waveform copier to copy the waveform variation of the optical output from the optical multiplexer on another carrier.

Since the waveform copier copies the time-division-multiplexed light of the orthogonal polarization on another carrier, the finally obtained optical pulse has a single polarization. In the middle process, because the optical pulse is multiplexed in the time domain in the orthogonal polarization, the pulse width can be wider before the time-division-multiplexing. Since the pulse width can be wider, the spectrum width can be narrower. The final output pulse has the single polarization, and therefore the technique to multiplex the adjacent channels in the time domain in the orthogonal polarization state can be used at the same time. According to this configuration, the transmission characteristics can be improved and the high-speed optical transmission can be realized.

Preferably, the optical multiplexer consists of an optical delay to delay the optical output from the second data modulator for a predetermined time, and a polarization combiner to combine the optical outputs from the optical delay and polarization converter maintaining their polarizations. According to this configuration, low-speed optical pulses can be efficiently multiplexed in the time domain without having any interference.

Preferably, the optical multiplexer consists of an optical delay to adjust a time position of at least one of the optical outputs from the second data modulator and polarization converter.

An optical transmitter according to the invention consists of a first optical data generator to generate a first optical data of a linear polarization to carry a first data, a second optical data generator to generate a second optical data of a linear polarization to carry a second data, an optical multiplexer to multiplex the first and second data in the time domain in mutually orthogonal polarization directions, and a waveform copier to copy the waveform variation of the optical output from the optical multiplexer on another carrier.

Since the waveform copier copies the time-division-multiplexed light of the orthogonal polarization on another carrier, the finally obtained optical pulse has a single polarization. In the middle process, the optical pulse is multiplexed in the time domain in the orthogonal polarization, the pulse width can be wider before the time-division-multiplexing. Because the pulse width can be wider, the spectrum width can be narrower. As the final output pulse has the single polarization, the technique to multiplex the adjacent channels in the time domain in the orthogonal polarization state can be used at the same time. According to this configuration, the transmission characteristics can be improved and the high-speed optical transmission can be realized.

Preferably, the optical multiplexer consists of an optical delay to delay the second optical data for a predetermined time, and a polarization combiner to combine the optical output from the optical delay and the first optical data in the orthogonal polarization state. According to this configuration, low-speed optical pulses can be efficiently multiplexed in the time domain without having any interference.

Preferably, the optical multiplexer consists of a polarization converter to convert the first optical data into a predetermined polarization direction. According to this configuration, the relation between the first and second optical data can be set arbitrarily, for example those two data can be identical.

Preferably, the optical multiplexer consists of an optical delay to delay the second optical data for a predetermined time, and a polarization combiner to combine the optical outputs from the optical delay and the polarization converter in the orthogonal polarization state. According to this configuration, the low-speed optical pulses can be efficiently multiplexed in the time domain without having any interference.

Preferably, the optical multiplexer consists of an optical delay to adjust a time location of at least one of the first and second optical data.

### BRIEF DESCRIPTION OF THE DRAWING

The above and other objects, features and advantages of the present invention will be apparent from the following detailed description of the preferred embodiments of the invention in conjunction with the accompanying drawings, in which:
FIG. 1 shows a schematic block diagram of an embodiment according to the invention; and
FIG. 2 shows waveform examples of the embodiment.

### DESCRIPTION OF THE PREFERRED EMBODIMENT

Embodiments of the invention are explained below in detail with reference to the drawings.

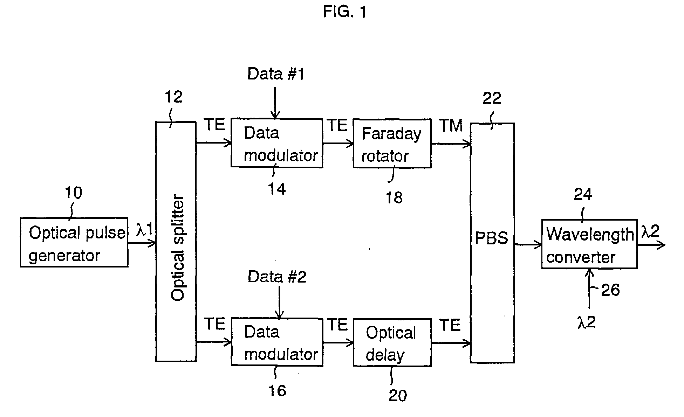

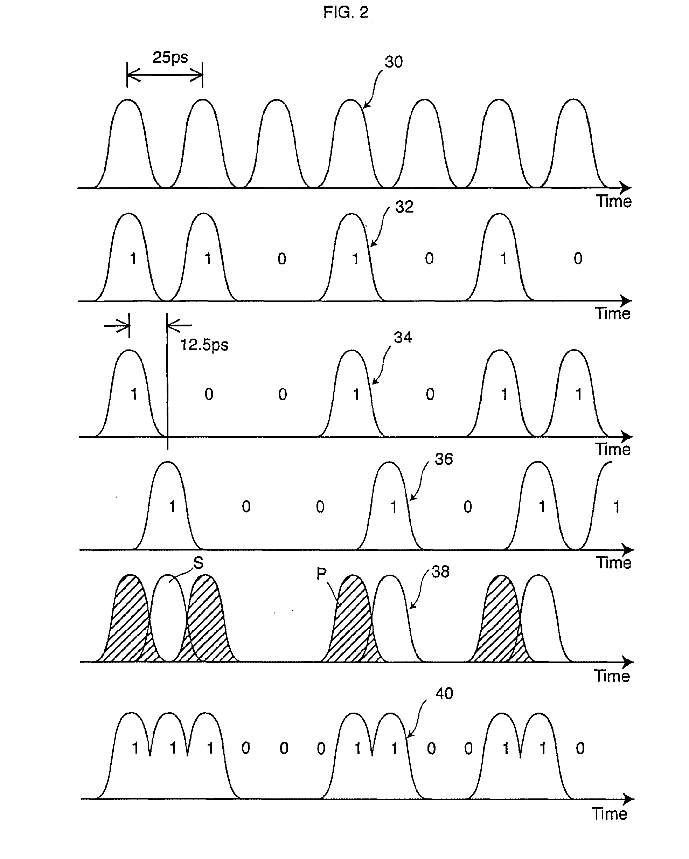

FIG. 1 shows a schematic block diagram according to the invention and FIG. 2 shows waveform examples of each part.

An optical pulse generator 10 generates an optical pulse having a transmission rate half a final target, for example, a 40 Gbit/s optical pulse of linear polarization. The wavelength of the optical output from the optical pulse generator 10 is λ1 and the polarization is S. Reference numeral 30 in FIG. 2 denotes an output pulse train from the optical pulse generator 10.

An optical splitter 12 splits the optical pulse output from the optical pulse generator 10 into two portions maintaining the polarization and applies one portion to a data modulator 14 and the other to a data modulator 16. The data modulator 14 modulates the one portion of the optical pulses from the optical splitter according to a data #1, and the data modulator 16 modulates the other portion of the optical pulses from the optical splitter 12 according to a data #2. That is, the data modulators 14 and 16 block the optical pulses when the data value is '0', and transmit them when the data value is '1'. Reference numeral 32 in FIG. 2 denotes a waveform example of the output from the data modulator 14, and reference numeral 34 denotes a waveform example of the output from the data modulator 16. In FIG. 2, the data #1 is assumed to be 1101010... and the data #2 is assumed to be 1001011....

A Faraday rotator 18 rotates the linear polarization direction of the optical output from the data modulator 14 by 90° to convert it from S polarization to P polarization. An optical delay 20 delays the output pulse from the data modulator 16 so that it delays for the pulse interval (when the transmission rate is 80 Gbit/s, the pulse interval is 12.5 ps) of the transmission rate after the time domain multiplexing compared to the output pulse from the Faraday rotator 18. Reference numeral 36 in FIG. 2 denotes a waveform of the output pulse from the optical delay 20.

A polarization beam splitter 22 combines the optical outputs from the Faraday rotator 18 and optical delay 20 maintaining their polarizations. Reference numeral 38 in FIG. 2 denotes a waveform of the optical output from the polarization beam splitter 22. The pulse with oblique lines denotes the P polarization.

The optical output from the polarization beam splitter 22 enters a wavelength converter 24. A CW probe light .26 of wavelength λ2 also enters the wavelength converter 24. The wavelength converter 24 modulates the intensity of the CW probe light 26 of wavelength λ2 according to the intensity variation of the output from the polarization beam splitter 22. As an example of such wavelength converter 24, a configuration that uses a EA optical modulator is well known (see U.S. Patent No. 5,959,764). Since the wavelength converter 24 exclusively depends on the intensity variation of the optical output from the polarization beam splitter 22 and does not depend on its polarization, the polarization of the optical output from the wavelength converter 24 is determined by the polarization of the probe light 26. Accordingly, the wavelength of the carrier of the time division multiplexed optical signal output from the polarization beam splitter 22 is converted from the wavelength λ1 to another wavelength λ2.

The wavelength converter 24 functions as a waveform copier to copy the waveform variation of the optical output from the polarization beam splitter 22 on another carrier (the probe light 26). Depending on the propagation directions of the optical output from the polarization beam splitter 22 and probe light 26 in the wavelength converter 24, the wavelength λ2 of the probe light 26 can be identical with the wavelength λ1 of the optical output from the optical pulse generator 10.

Reference numeral 40 in FIG. 2 denotes a waveform of the optical output from the wavelength converter 24. Since the optical output from the wavelength converter 24 is generated from the probe light 26 of wavelength λ2, its polarization is identical with that of the probe light 26. That is, the polarization direction of each pulse of the optical output from the wavelength converter 24 is equivalent. Accordingly, by disposing such an optical transmitter in this embodiment on each adjacent channel, their optical output can be multiplexed in the time domain in the orthogonal polarizations. The time domain multiplexing system to orthogonalize the polarizations between the adjacent wavelength channels can be used.

In this embodiment, the optical pulse generator 10 can generate the optical pulse with larger pulse width compared to the conventional system, it is easy to narrow the spectrum width. Consequently, the transmission characteristics are greatly improved. The time domain multiplexing system to orthogonalize polarizations between the adjacent wavelength channels can be used, and this also contributes to improve the transmission characteristics.

As readily understandable from the aforementioned explanation, according to the invention, a high-speed optical signal with narrow spectrum width can be easily generated. In addition, the four-wave mixing that occurs due to the interaction between the pulses can be suppressed. Consequently, the transmission characteristics can be greatly improved. The time domain multiplexing system to orthogonalize the polarizations between the adjacent wavelength channels can be used and this also contributes to improve the transmission characteristics.

While the invention has been described with reference to the specific embodiment, it will be apparent to those skilled in the art that various changes and modifications can be made to the specific embodiment without departing from the spirit and scope of the invention as defined in the claims.

## Claims

1. An optical transmitter comprising:
an optical pulse generator to generate an optical pulse train of a constant linear polarization;
an optical splitter to split the optical output from the optical pulse generator into two portions;
a first data modulator to modulate the one portion of the optical output from the optical splitter according to a first data;
a second data modulator to modulate the other portion of the optical output from the optical splitter according to a second data;
a polarization converter to convert the polarization of the optical output from the first data modulator into an orthogonal polarization;
an optical multiplexer to multiplex the optical outputs from the second data modulator and polarization converter in the time domain; and
a waveform copier to copy the waveform variation of the optical output from the optical multiplexer on another carrier.

2. The optical transmitter of claim 1 wherein the optical multiplexer comprises an optical delay to delay the optical output from the second data modulator for a predetermined time and a polarization combiner to combine the optical outputs from the optical delay and polarization converter maintaining their polarizations.

3. The optical transmitter of claim 1 or 2 wherein the optical multiplexer comprises an optical delay to adjust a time position of at least one of the optical outputs from the second data modulator and polarization converter.

4. An optical transmitter comprising:
a first optical data generator to generate a first optical data of linear polarization to carry a first data;
a second optical data generator to generate a second optical data of linear polarization to carry a second data;
an optical multiplexer to multiplex the first and second optical data in the time domain in orthogonal polarization directions; and
a waveform copier to copy the waveform variation of the optical output from the optical multiplexer on another carrier.

5. The optical transmitter of claim 4 wherein the optical multiplexer comprises an optical delay to delay the second optical data for a predetermined time and a polarization combiner to combine the optical output from the optical delay and the first optical data in the orthogonal polarization state.

6. The optical transmitter of claim 4 or 5 wherein the optical multiplexer comprise a polarization converter to convert the first optical data into a predetermined polarization direction.

7. The optical transmitter of claim 6 wherein the optical multiplexer comprises an optical delay to delay the second optical data for a predetermined time, and a polarization combiner to combine the optical outputs from the optical delay and polarization converter in the orthogonal polarization state.

8. The optical transmitter of claim 4 wherein the optical multiplexer comprises an optical delay to adjust a time position of at least one of the first and second optical data.
